# EUROPEAN PATENT SPECIFICATION

(11) **EP 3 251 915 B1**
(45) Date of publication and mention of the grant of the patent: **14.08.2024**
(21) Application number: 16743508.0
(22) Date of filing: 29.01.2016
(51) Int. Cl.: B61F 5/24, B60G 99/00, B60G 17/06

(54) **VEHICLE DAMPING APPARATUS**
FAHRZEUGDÄMPFER
APPAREIL D'AMORTISSEMENT DE VÉHICULE

(30) Priority: 30.01.2015 JP 2015017902
(43) Date of publication of application: 06.12.2017
(73) Proprietor: Hitachi Astemo, Ltd., Hitachinaka-shi, Ibaraki 312-8503 (JP)
(72) Inventor: KINOSHITA, Tomohiro, Ibaraki 312-8503 (JP); AKAMI, Yusuke, Ibaraki 312-8503 (JP)
(74) Representative: Hoffmann Eitle
(86) International application number: PCT/JP2016/052599
(87) International publication number: WO 2016/121905

(56) References cited:
- CN-A- 104 249 743
- JP-A- 2003 320 931
- JP-A- 2003 320 931
- JP-A- 2013 052 698
- JP-A- 2013 052 698
- JP-A- 2014 198 522
- JP-A- 2014 198 522
- JP-A- H06 278 605
- JP-A- H06 278 605

## Description

### TECHNICAL FIELD

The present invention relates to a vehicle damping system which is suitably used to reduce rail vehicle vibration and the like.

### BACKGROUND ART

Vehicles such as automobiles are usually equipped with, for example, a damping force adjustable shock absorber whose damping characteristics are variable. The damping force adjustable shock absorber operates as a force generation mechanism which reduces vibration under the control of commands from outside. The damping force adjustable shock absorber is controlled in accordance with a measured value of an acceleration sensor that is provided in a vehicle (see Patent Literature 1, for example).

### CITATION LIST

### PATENT LITERATURE

Patent Literature 1: Japanese Unexamined Patent Application Publication (Kokai) No. H09-216508 Further, JP-A-2014-198522 discloses a damping-force adjustable hydraulic damper (yaw damper) that mitigates and reduces the horizontal rotations (yawing) of a chassis with respect to a vehicle body separately in right and left directions. This teaching relates to the art for solving the problem that the force that the yaw damper generates in order to suppress the vibration of the chassis acts, on the vehicle body side, as a force that excites the vibration of the vehicle body, and that the force eventually aggravates the bending vibration of the vehicle body.

### SUMMARY OF INVENTION

### TECHNICAL PROBLEM

Patent Literature 1 includes a plurality of acceleration sensors to detect various vibration modes, which may increase cost. To solve this problem, the inventors of the present invention examined whether a plurality of vibration modes could be detected by means of a 6-axis sensor that was capable of detecting 3-axis acceleration and 3-axis angular velocity. In the result, even if the 6-axis sensor was not provided at the position of the center of gravity of a vehicle body (yaw center position), a measured value could be corrected on the basis of distance between the provided position of the 6-axis sensor and the yaw center position or the like to make the condition equivalent to the one that the 6-axis sensor is provided at the position of the center of gravity of the vehicle body.

In the case of rail vehicles, however, the yaw center position shifts according to the traveling speed and the traveling direction of a vehicle. Higher vehicle speed causes larger vibration in the rear part of the vehicle body relative to the traveling direction of the vehicle. The yaw center position accordingly shifts from the position of the center of gravity of the vehicle body toward the front side of the vehicle body. This means that distance between the position of the 6-axis sensor and the yaw center position changes according to the traveling speed and the traveling direction. In view of this, the inventors recognized the problem that, if the measured value detected by the 6-axis sensor was corrected on the basis of the position of the center of gravity of the vehicle body, it was impossible to obtain an accurate correction value, and the damping characteristics of the force generation mechanism could not be properly controlled.

The present invention has been made in light of the foregoing problem. An object of the invention is therefore to provide a vehicle damping system that is capable of properly controlling a generative force of a force generation mechanism.

### SOLUTION TO PROBLEM

To solve the problem, the invention provides a vehicle damping system according to claim 1. Further preferred embodiments are defined in the dependent claims.

### ADVANTAGEOUS EFFECT OF INVENTION

The present invention makes it possible to properly control the generative force of the force generation mechanism.

### BRIEF DESCRIPTION OF DRAWINGS

Fig. 1 is an elevation view of a rail vehicle to which a vehicle damping system according to a first embodiment is applied;
Fig. 2 is a block diagram of a control unit illustrated in Fig. 1;
Fig. 3 is a block diagram of a control unit according to a second embodiment;
Fig. 4 is a block diagram of a generalized plant for designing a gain-scheduled H∞ controller;
Fig. 5 is a block diagram of a control unit according to a third embodiment;
Fig. 6 is a block diagram of a control unit according to a fourth embodiment; and
Fig. 7 is an elevation view of a rail vehicle to which a vehicle damping system according to a modification not falling under an embodiment is applied.

### DESCRIPTION OF EMBODIMENTS

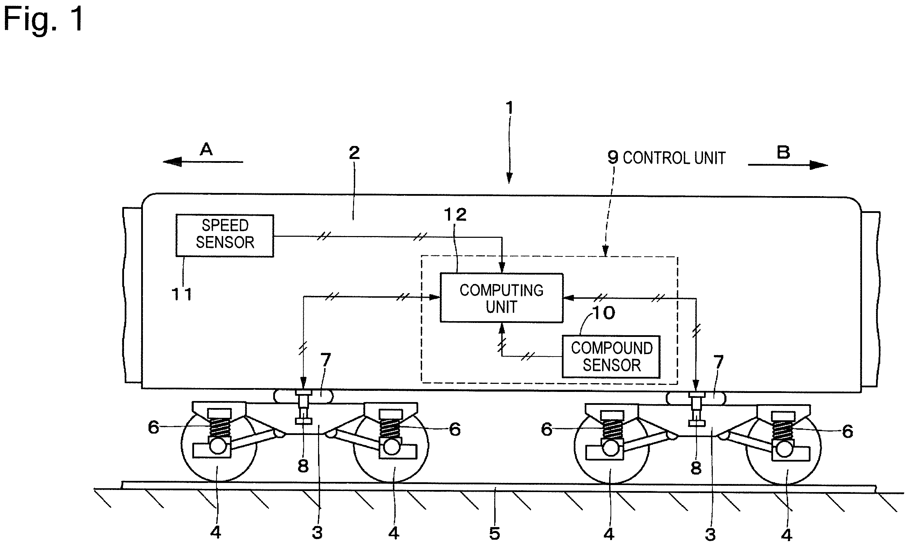

Vehicle damping systems according to embodiments of the present invention will be discussed below in detail with reference to the attached drawings, for the case where the system is mounted on a rail vehicle. Referring to Fig. 1, an arrow A points to a forward side, viewed in a traveling direction of the rail vehicle, and an arrow B points to a backward side, viewed in the traveling direction of the rail vehicle.

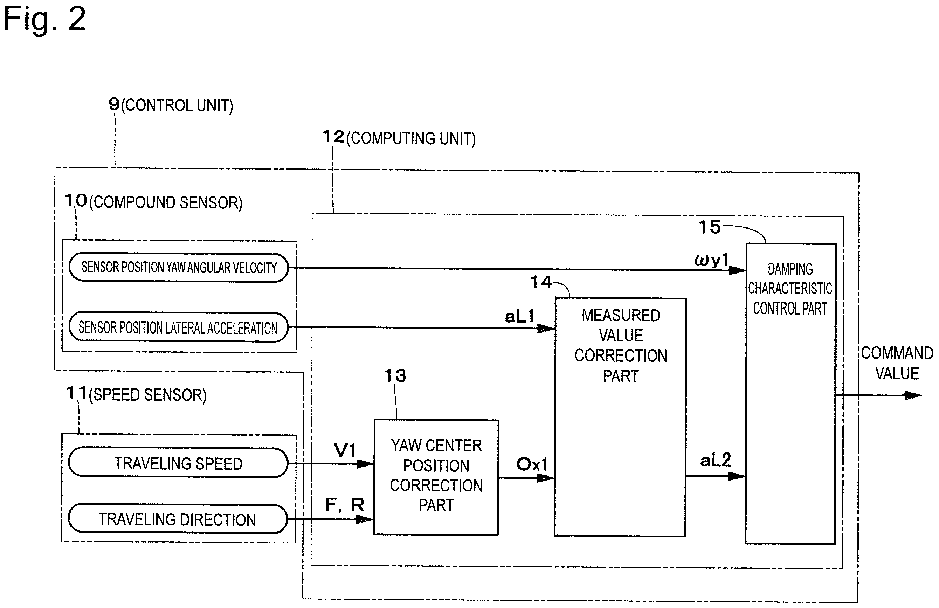

Figs. 1 and 2 illustrate a first embodiment of the invention. In Fig. 1, a rail vehicle 1 (vehicle) includes a vehicle body 2 boarded by, for example, a passenger, an operator, etc., and front and rear chassis 3 disposed under the vehicle body 2. The chassis 3 are respectively disposed in front and rear parts of the vehicle body 2 so as to be spaced apart from each other. Each of the chassis 3 includes four wheels 4 (only left-side wheels are shown). The wheels 4 rotate on right and left rails 5 (only one of the rails is shown), making the rail vehicle 1 travel along the rails 5, for example, in the direction of the arrow A when the rail vehicle 1 travels forward.

Axle springs 6 are respectively disposed between the chassis 3 and the wheels 4. The axle springs 6 mitigate vibration and impacts transmitted from the wheels 4 (axles of the wheels). Air springs 7 and damping force adjustable shock absorbers 8 (hereinafter, referred to as dampers 8) are respectively disposed between the vehicle body 2 and the chassis 3. The air springs 7 function as bolster springs, and the dampers 8 are disposed in parallel with the air springs 7. Each of the chassis 3 includes two of the air springs 7 and two of the dampers 8 on each lateral side thereof. The rail vehicle 1 therefore includes four air springs 7 and four dampers 8 in total.

As illustrated in Fig. 1, the damper 8 is interposed between the vehicle body 2 in which the damper 8 is provided and the chassis 3 which is located on a ground surface side. The damper 8 exerts a vibration damping force which opposes vertical vibration of the vehicle body 2 which acts on the chassis 3. The damper 8 thus reduces the vertical vibration of the vehicle body 2.

In the foregoing case, the damper 8 has a damping characteristic that varies in accordance with a command (command value) from a computing unit 12 described below. The dampers 8 are respectively formed of, for example, damping force adjustable hydraulic shock absorbers called semi-active dampers as cylinder units whose damping forces are individually adjustable. Specifically, valve opening pressure of a control valve (not shown) is adjusted by supplying drive current from the later-described computing unit 12 to the damper 8. The damping characteristic of the damper 8 then can be serially adjusted from a hard characteristic (hard damping characteristic) to a soft characteristic (soft damping characteristic).

The damping characteristic of the damper 8 does not necessarily have to be serially adjusted, and may be adjustable in two or more steps. The damper 8 may be formed of a full-active damper whose generative force is adjustable by external power, instead of the semi-active damper. To be more specific, the damper 8 may be formed of an electromagnetic suspension which is supplied with power from outside to drive a linear motor and thus generate force or may be formed of a fluid-pressure active damper whose generative force can be adjusted by forcedly supplying working fluid from a tank containing the working fluid toward the damper or discharging the working fluid from the damper.

A control unit 9 controls the damping characteristics of the dampers 8. That is, the control unit 9 controls the vibration of the vehicle body 2, and defines the vehicle damping system together with the dampers 8. The control unit 9 is formed of a compound sensor 10 and the computing unit 12.

The compound sensor 10 is provided at a first point that is located at a freely-selected position on the vehicle body 2. The compound sensor 10 defines the vehicle behavior detection device which detects behaviors of the vehicle body 2. The compound sensor 10 is formed as a 6-axis sensor capable of detecting, for example, 3-axis acceleration and 3-axis angular velocity. The compound sensor 10 is mounted on one vehicle (with respect to each vehicle body). The compound sensor 10 is capable of detecting yaw (yawing) at the first point in the vehicle body 2, namely, yaw angular velocity ωy1. The compound sensor 10 is further capable of detecting lateral acceleration aL1 at the first point in the vehicle body 2. The first point in the vehicle body 2 does not have to be located, for example, at a position of the center of gravity of the vehicle body 2, and may be located at a freely-selected position other than the center of gravity of the vehicle body 2. The compound sensor 10 may be disposed in the later-described computing unit 12. A value detected by the compound sensor 10 is outputted to the computing unit 12 discussed below. In the case of the damper 8 as illustrated in Fig. 1, namely, a vertical damper, the center of pitching shifts from the position of the center of gravity of the vehicle body. In the case of a lateral damper, the center of yawing shifts from the position of the center of gravity of the vehicle body. The present embodiment discusses a case in which the compound sensor 10 is used and provided at the first point that is located at the freely-selected position of the vehicle body 2. It is also possible to use, for example, two or three sensors or compound sensors.

A speed sensor 11 defines a traveling speed detection device that is capable of detecting or calculating traveling speed V1 of the vehicle body 2 (rail vehicle 1). The speed sensor 11 does not necessarily have to directly detect the traveling speed of the rail vehicle 1. Instead, the speed sensor 11 may indirectly detect the traveling speed from rotational velocities of the wheels 4 and the like, which are measured by a wheel speed sensor. In the case of combination vehicles, there is little difference between coupled rail vehicles 1 in traveling speed. This means that the speed sensor 11 does not necessarily have to be disposed in every vehicle (one speed sensor 11 per vehicle). It is possible to use a value detected by the speed sensor which is provided in another coupled vehicle.

The speed sensor 11 further detects a traveling direction (F or R) of the rail vehicle 1. The speed sensor 11 can output the traveling direction as a traveling direction F of the rail vehicle 1 when the rail vehicle 1 travels in the direction of the arrow A in Fig. 1, and can output the traveling direction as a traveling direction R of the rail vehicle 1 when the rail vehicle 1 travels in the direction of the arrow B.

The traveling direction of the rail vehicle 1 may be included in traveling speed V1 which is detected or calculated by the speed sensor 11. The traveling direction of the rail vehicle 1 can be specified, for example, by setting the traveling speed V1 to a positive number when the vehicle travels in the direction of the arrow A in Fig. 1, and a negative number when the vehicle travels in the direction of the arrow B. The value detected by the speed sensor 11 is outputted to the computing unit 12 described below. According to the present embodiment, the control unit 9 and the speed sensor 11 are separately located. However, it is possible to store the speed sensor 11 within the control unit 9.

The computing unit 12 is formed of, for example, a microcomputer or the like, and constitutes a correction device configured to correct yaw center position and correct the value detected by the compound sensor 10. The compound sensor 10 and the speed sensor 11 are connected to an input side of the computing unit 12. The dampers 8 respectively interposed between vehicle body 2 and the chassis 3 are connected to an output side of the computing unit 12. The computing unit 12 generates a damping force command signal of the damper 8, for example, in accordance with skyhook theory (skyhook control law) with respect to each sampling time based on a detection signal from the speed sensor 11 or a detection signal from the compound sensor 10. The computing unit 12 then variably controls the damping force of each of the dampers 8 in order to reduce rotational vibration of the vehicle body 2. The computing unit 12 includes a yaw center position correction part 13 and a measured value correction part 14.

The yaw center position correction part 13 corrects a position of the center of the rotational vibration of the vehicle body 2, namely, the yaw center position in accordance with a result of the detection or calculation by the speed sensor 11. The speed sensor 11 is connected to an input side of the yaw center position correction part 13, and the later-described measured value correction part 14 to an output side of the yaw center position correction part 13. For example, vibration in the rear part of the vehicle body 2 of the rail vehicle 1 relative to the traveling direction becomes large as the traveling speed increases. In this case, since the entire length of the rail vehicle 1 (one vehicle) is greater than the entire length of an automobile or the like, a central point of yaw vibration moves away from the center position (position of the center of gravity) of the vehicle body 2 toward the front side of the vehicle body 2 along with the increasing traveling speed.

The yaw center position correction part 13 calculates how much the yaw center position is deviated from the position of the center of gravity of the vehicle body 2 on the basis of the values of the traveling speed V1 and the traveling direction F (or R), which have been detected by the speed sensor 11, and then corrects the yaw center position. More specifically, relationship of the yaw center position with respect to the traveling speed and the traveling direction of the rail vehicle 1, which have been previously (experimentally) obtained, can be mapped and stored in, for example, a storage part (not shown) of the computing unit 12. The yaw center position correction part 13 can calculate the yaw center position by referring to the map on the basis of the values of the traveling speed V1 and the traveling direction F, which have been detected by the speed sensor 11, and the like.

According to another method, the storage part of the computing unit 12 may store an arithmetic equation for calculating the yaw center position which has been experimentally obtained. In this case, the yaw center position can be calculated using the yaw center position correction part 13 by assigning the values of the traveling speed V1 and the traveling direction F, which have been detected by the speed sensor 11, and the like, to the arithmetic equation. Subsequently, yaw center position O×1 corrected by the yaw center position correction part 13 is outputted to the measured value correction part 14.

The measured value correction part 14 as a part for correcting a lateral acceleration detection value is configured to correct the value detected by the compound sensor 10 in accordance with the yaw center position. The compound sensor 10 and the yaw center position correction part 13 are connected to an input side of the measured value correction part 14. Based on the yaw center position O×1 corrected by the yaw center position correction part 13, the measured value correction part 14 corrects the lateral acceleration aL1 detected by the compound sensor 10 to a yaw center position lateral acceleration aL2. In particular, the measured value correction part 14 corrects the lateral acceleration aL1 at the first point to the lateral acceleration aL2 at the yaw center position O×1, for example, on the basis of distance between the yaw center position O×1 and the first point at which the compound sensor 10 is provided, as a positional relationship between the yaw center position O×1 and the first point at which the compound sensor 10 is provided.

The yaw center position lateral acceleration aL2 corrected by the measured value correction part 14 and the sensor position yaw angular velocity ωy1 which has been detected by the compound sensor 10 are outputted to a damping characteristic control part 15. The damping characteristic control part 15 calculates target damping forces of the dampers 8 on the basis of the lateral acceleration aL2 and the yaw angular velocity ωy1 and outputs command values. Based on the calculated target damping forces of the dampers 8, the computing unit 12 supplies drive currents to the dampers 8 to adjust the damping forces of the dampers 8. The control unit 9 thus can reduce the vibration (oscillation) of the vehicle body 2 in the lateral direction.

The vehicle damping system of the present embodiment is configured as described above. The following description will explain damping control which is carried out by the control unit 9 of the rail vehicle 1.

When the rail vehicle 1 travels at low speed in the direction of the arrow A in Fig. 1, the yaw center position is the center position of gravity of the vehicle body 2. In such a situation, the measured value of the compound sensor 10 can be corrected to a value at the position of the center of gravity (yaw center position) of the vehicle body 2 on the basis of the distance between the provided position (first point) of the compound sensor 10 and the yaw center position.

In the case of rail vehicles, vibration in the rear part of a vehicle body relative to a traveling direction becomes large as traveling speed increases. Therefore, the yaw center position of the rail vehicle 1 accordingly shifts from the position of the center of gravity of the vehicle body toward the front side of the vehicle body 2. That is, the distance between the compound sensor 10 and the yaw center position varies according to the traveling speed. This creates a problem that the measured value detected by the compound sensor 10 cannot be properly corrected.

The present embodiment further enables measurement of the yaw vibration of the vehicle body, for example, by providing acceleration sensors in the front and rear parts of the vehicle body. In this case, however, the acceleration sensors need to be provided separately in the front and rear parts of the vehicle body, so that the acceleration sensors are limited in provided position, and a plurality of acceleration sensors have to be mounted on the vehicle body. This creates a problem of cost increase due to necessity of wires for connecting the acceleration sensors and the computing unit, and the like.

According to the present embodiment, the computing unit 12 mounted on the rail vehicle 1 is configured to correct (calculate) the yaw center position in accordance with the traveling speed and the traveling direction of the rail vehicle 1. The computing unit 12 controls each of the dampers 8 by implementing a control program with respect to each predetermined control cycle to reduce the vibration (oscillation) of the vehicle body 2. Details will be provided below.

The speed sensor 11 mounted on the rail vehicle 1 outputs the traveling speed V1 and the traveling direction F of the rail vehicle 1 to the computing unit 12. The compound sensor 10 mounted on the rail vehicle 1 outputs to the computing unit 12 the lateral acceleration aL1 and the yaw velocity angular ωy1 at the first point where the compound sensor 10 is provided.

The yaw center position correction part 13 of the computing unit 12 then corrects (calculates) the yaw center position on the basis of the traveling speed V1 and the traveling direction F of the rail vehicle 1. More specifically, the yaw center position correction part 13 refers to a chart (map) of the yaw center position, which is stored in the storage part of the computing unit 12, and corrects the yaw center position on the basis of the traveling speed V1 and the traveling direction F of the rail vehicle 1.

The yaw center position O×1 corrected by the yaw center position correction part 13 is outputted to the measured value correction part 14. The measured value correction part 14 corrects the lateral acceleration aL1 at the first point to the lateral acceleration aL2 at the yaw center position O×1 on the basis of the distance between the yaw center position O×1 and the first point at which the compound sensor 10 is provided.

The computing unit 12 calculates the target damping forces of the four dampers 8 of the vehicle body 2 in order to reduce a lateral vibration (oscillation) of the vehicle body 2 on the basis of the lateral acceleration aL2 calculated by the measured value correction part 14, and the yaw velocity angular ωy1. On the basis of the calculated target damping forces of the dampers 8, the computing unit 12 supplies drive currents to the dampers 8, thus adjusting the damping forces of the dampers 8. The lateral vibration (oscillation) of the vehicle body 2 is reduced in this manner.

According to the first embodiment, the computing unit 12 mounted on the vehicle body 2 is capable of calculating the yaw center position O×1 on the basis of the traveling speed V1 and the traveling direction F or R of the rail vehicle 1. The computing unit 12 is further capable of correcting the lateral acceleration aL1 at the first point to the lateral acceleration aL2 at the yaw center position O×1 on the basis of the distance between the compound sensor 10 provided at the freely-selected first point in the vehicle body 2 and the yaw center position O×1.

In the result, even if the traveling speed V1 of the rail vehicle 1 increases, and the yaw center position shifts from the position of the center of gravity of the vehicle body 2, it is possible to make the condition equivalent to the one that the compound sensor 10 is provided at the yaw center position O×1 which has shifted. A lateral behavior of the vehicle body 2 can be accurately detected by one compound sensor 10, so that the damping characteristics of the dampers 8 can be properly controlled using a small number of (for example, one) compound sensors 10.

Since the compound sensor 10 can be providedat a freely-selected position, this improves freedom of provision of the compound sensor 10 in the vehicle body 2. The vehicle body 2 further includes one compound sensor 10 which is capable of detecting a plurality of vibration modes. It is therefore unnecessary to provide the vehicle body 2 with a plurality of acceleration sensors for detecting various vibration modes, resulting in cost reduction.

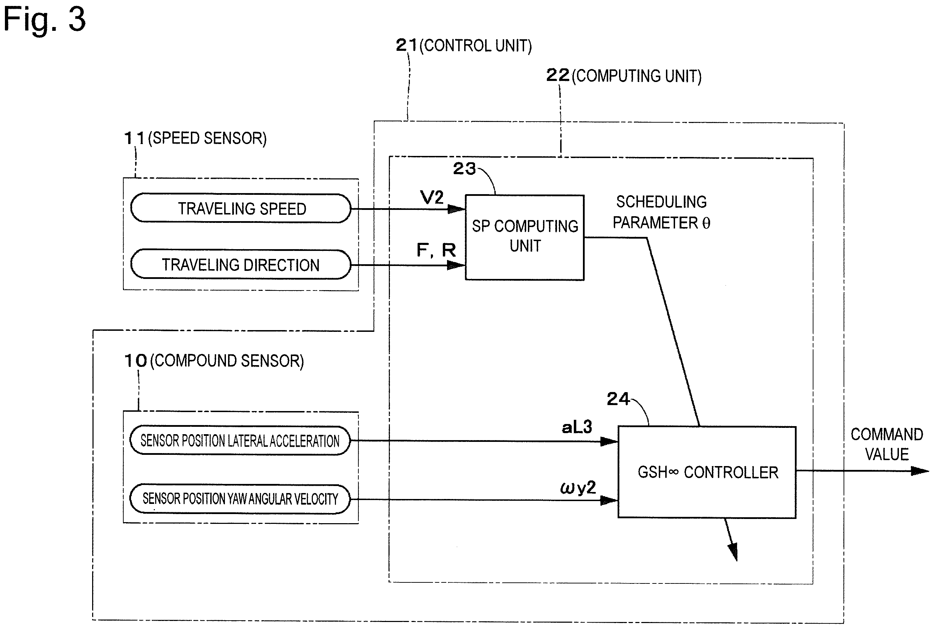

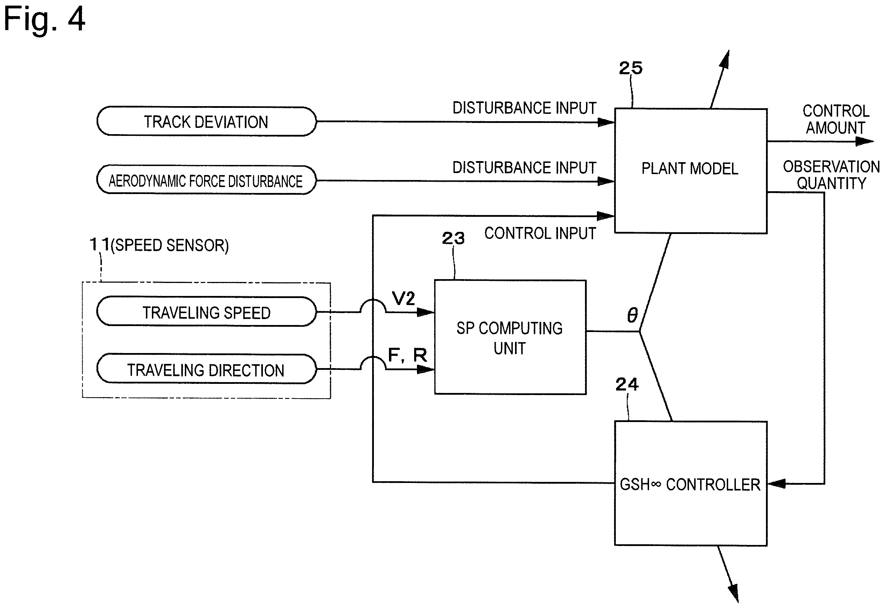

Figs. 3 and 4 illustrate a second embodiment of the present invention. The second embodiment is characterized by controlling the dampers using a gain-scheduled gain-scheduled H∞ controller. In the second embodiment, the same constituent elements as those of the first embodiment are provided with the same reference marks, and an explanation thereof will be omitted.

The control unit 21 controls the damping characteristics of the dampers 8. The control unit 21 thus controls the vibration of the vehicle body 2 and defines the vehicle damping system together with the dampers 8. The control unit 21 is formed of the compound sensor 10 and the computing unit 22.

The computing unit 22 is formed of, for example, a microcomputer or the like, and constitutes a correction device configured to correct the yaw center position and correct the value detected by the compound sensor 10. The compound sensor 10 and the speed sensor 11 are connected to the input side of the computing unit 22. Connected to the output side of the computing unit 22 are the dampers 8 interposed between the vehicle body 2 and the chassis 3. The computing unit 22 includes a later-described scheduling parameter computing unit 23 (hereinafter, referred to as SP computing unit 23) and a Gain Scheduled H-infinity Control 24 (hereinafter, referred to as GSH H∞ controller 24) .

On the basis of traveling speed V2 and the traveling direction F (or R) detected by the speed sensor 11, the SP computing unit 23 calculates the yaw center position according to the traveling speed V2 and the like as a scheduling parameter θ (hereinafter, referred to as parameter θ). To that end, the SP computing unit 23 is configured, for example, in a similar manner to the yaw center position correction part 13 of the first embodiment.

The GSH∞ controller 24 is designed on the basis of a generalized plant illustrated in Fig. 4. The GSH∞ controller 24 calculates a controller output used as the target damping force on the basis of lateral acceleration aL3 and yaw velocity ωy2 outputted from the compound sensor 10, and the parameter θ outputted from the SP computing unit 23.

The generalized plant includes a plant model 25 that is obtained by modeling the rail vehicle 1 in anticipation of the fact that the yaw center position sifts according to the traveling speed V2 and the like. The plant model 25 is configured on the basis of the parameter θ calculated from the traveling speed V2 and the traveling direction F or R. The plant model 25 is under feedback control by the GSH∞ controller 24. The generalized plant includes a control input according to the controller output, a disturbance input according to track deviation and aerodynamic force disturbance, control amount which is outputted from the plant model 25, and an observation quantity (for example, the lateral acceleration aL3 and the yaw velocity ωy2). The GSH∞ controller 24 is determined by solving an H-infinity control problem with respect to the generalized plant described above.

The GSH∞ controller 24 therefore calculates, for example, such a target damping force as to reduce the control amount of the plant model 25, on the basis of the lateral acceleration aL3 and the yaw velocity ωy2 which have been outputted from the compound sensor 10, and the parameter θ outputted from the SP computing unit 23. The computing unit 22 supplies drive currents to the dampers 8 in accordance with the calculated target damping forces of the dampers 8, and thus adjusts the damping forces of the dampers 8. The lateral vibration (oscillation) of the vehicle body 2 is reduced in this manner.

In the above process, the GSH∞ controller 24 is occasionally updated according to the parameter θ. The rail vehicle 1 according to the plant model 25 is therefore controlled by the updated GSH∞ controller 24.

Like the first embodiment discussed above, the second embodiment also makes it possible to properly control the damping characteristics of the dampers 8 by means of a small number of (one, for example) compound sensors 10. That is, in anticipation of the fact that the yaw center position shifts from the position of the center of gravity of the vehicle body 2 as a result of an increase in the traveling speed V2 of the rail vehicle 1, the second embodiment configures the plant model 25 on the basis of the parameter θ according to the yaw center position. Since the GSH∞ controller 24 is designed using the generalized plant including the plant model 25, the GSH∞ controller 24 can correct the yaw center position of the vehicle body 2 in accordance with the traveling speed V2 of the rail vehicle 1, and then carry out the calculation equivalent to the correction of the lateral acceleration aL3 based on the corrected yaw center position.

The GSH∞ controller 24 further can change a gain on the basis of the parameter θ. The GSH∞ controller 24 is therefore capable of controlling the damping characteristics of the dampers 8 on the basis of the yaw center position as the parameter θ to achieve a desired behavior of the vehicle body 2.

The second embodiment also enables the compound sensor 10 to be provided at a freely-selected position of the vehicle body 2, and therefore provides a great freedom of provision of the compound sensor 10. The vehicle body 2 does not necessarily have to include a plurality of acceleration sensors for detecting various vibration modes, resulting in cost reduction.

The second embodiment has been described taking the GSH∞ controller 24 as an example. However, the invention is not limited to the GSH∞ controller 24 and is applicable to various kinds of model base controls, such as optimization control and H∞ control.

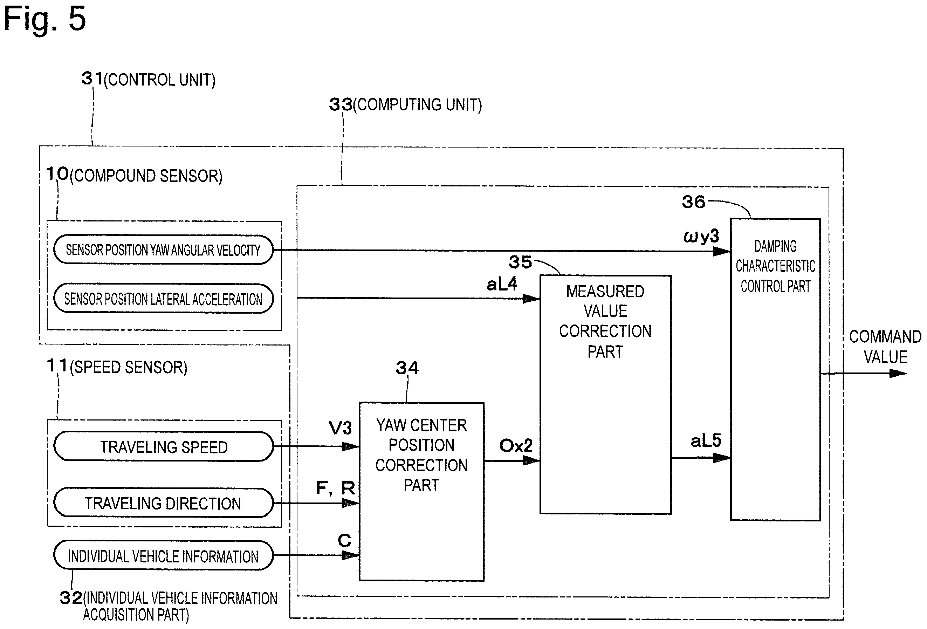

Fig. 5 illustrates a third embodiment of the present invention. The third embodiment is characterized in that the yaw center position is corrected in accordance with not only the traveling speed and the traveling direction of the rail vehicle but also information about an individual vehicle of combination vehicles including a plurality of coupled vehicles. In the third embodiment, the same constituent elements as those of the first embodiment are provided with the same reference marks, and explanations thereof will be omitted.

A control unit 31 controls the damping characteristics of the dampers 8. That is, the control unit 31 controls the vibration of the vehicle body 2, and defines the vehicle damping system together with the dampers 8. The control unit 31 is formed of the compound sensor 10 and a computing unit 33.

An individual vehicle information acquisition part 32 defines an individual vehicle information acquisition device which is capable of acquiring individual vehicle information, for example, as to what number the vehicle body 2 is from the front among the combination vehicles including the plurality of coupled vehicles. The individual vehicle information acquisition part 32 includes various kinds of storage devices such as non-volatile memories. When the combination vehicles are constructed, the individual vehicle information with respect to each vehicle is stored in the individual vehicle information acquisition part 32. The individual vehicle information acquisition part 32 outputs individual vehicle information C (for example, 10th vehicle from the front) of the vehicle body 2 which is a control target to the computing unit 33 described below. The individual vehicle information acquisition part 32 does not necessarily have to be configured as described above. The individual vehicle information acquisition part 32 may acquire the individual vehicle information from an outside source such as another vehicle.

The computing unit 33 is formed of, for example, a microcomputer or the like, and constitutes a correction device configured to correct the yaw center position and correct the value detected by the compound sensor 10. The compound sensor 10, the speed sensor 11, and the individual vehicle information acquisition part 32 are connected to the input side of the computing unit 33. Connected to the output side of the computing unit 33 are the dampers 8 interposed between the vehicle body 2 and the chassis 3. The computing unit 33 includes a yaw center position correction part 34 and a measured value correction part 35.

The yaw center position correction part 34 corrects a position of the center of rotational vibration of the vehicle body 2, namely, the yaw center position, in accordance with traveling speed V3 and the traveling direction F or R outputted from the speed sensor 11, and the individual vehicle information C outputted from the individual vehicle information acquisition part 32. The speed sensor 11 and the individual vehicle information acquisition part 32 are connected to an input side of the yaw center position correction part 34, and the later-described measured value correction part 35 to an output side thereof. In the combination vehicles including a plurality of coupled vehicles, the further back the vehicle is located as viewed in the traveling direction, the larger the yaw vibration in the vehicle is, and the larger the vibration in the rear part of the vehicle is.

On the basis of values of the traveling speed V3 and the traveling direction F (or R), which have been detected by the speed sensor 11, and the individual vehicle information C acquired from the individual vehicle information acquisition part 32, the yaw center position correction part 34 calculates how much the yaw center position is away from the position of the center of gravity of the vehicle body 2, and corrects the yaw center position. More specifically, relationship of the yaw center position with respect to the traveling speed and the traveling direction of the rail vehicle 1, which have been previously (experimentally) obtained, and the individual vehicle information are mapped and stored in a storage part (not shown) of the computing unit 33. The yaw center position correction part 34 can calculate the corrected yaw center position O×2 by referring to the map on the basis of values of the traveling speed V3 and the traveling direction F, which have been detected by the speed sensor 11, and the like, and the individual vehicle information C.

As another method, it is also possible to store in the storage part of the computing unit 33 an arithmetic equation for calculating the yaw center position with respect to each individual vehicle, which has been experimentally obtained. In this case, the yaw center position correction part 34 can calculate the yaw center position by assigning the values of the traveling speed V3 and the traveling direction F, which have been detected by the speed sensor 11, and the like, to the arithmetic equation corresponding to the individual vehicle information C detected by the individual vehicle information acquisition part 32. The yaw center position O×2 corrected by the yaw center position correction part 34 is then outputted to the measured value correction part 35.

The measured value correction part 35 as a part for correcting a lateral acceleration detection value corrects the value detected by the compound sensor 10, on the basis of the yaw center position O×2. The compound sensor 10 and the yaw center position correction part 34 are connected to an input side of the measured value correction part 35. The measured value correction part 35 corrects lateral acceleration aL4 which has been detected by the compound sensor 10 to yaw center position lateral acceleration aL5 on the basis of the yaw center position O×2 corrected by the yaw center position correction part 34. Specifically, on the basis of distance between the yaw center position O×2 and a first point at which the compound sensor 10 is provided, the measured value correction part 35 corrects the lateral acceleration aL4 at the first point to the lateral acceleration aL5 at the yaw center position O×2.

The yaw center position lateral acceleration aL5 corrected by the measured value correction part 35 and a sensor position yaw velocity coy3 detected by the compound sensor 10 are outputted to a damping characteristic control part 36. On the basis of the lateral acceleration aL5 and the yaw velocity ωy3, the damping characteristic control part 36 calculates target damping forces of the dampers 8 and outputs command values. The computing unit 33 supplies drive currents to the dampers 8 in accordance with the calculated target damping forces of the dampers 8, and thus adjusts the damping forces of the dampers 8. The lateral vibration (oscillation) of the vehicle body 2 can be reduced in this manner.

As discussed above, the third embodiment also can provide operation and advantages similar to the first embodiment. In particular, the third embodiment makes the correction (calculation) of the yaw center position O×2 on the basis of the traveling speed V3, the traveling direction F or R of the rail vehicle 1, and the individual vehicle information C. It is therefore unnecessary to alter the map of the yaw center position correction part 34 even if vehicle combination is changed, so that a correction value such as the lateral acceleration aL4 does not have to be changed every time the combination is changed. This eliminates a process for changing the correction value, which is associated with the vehicle combination.

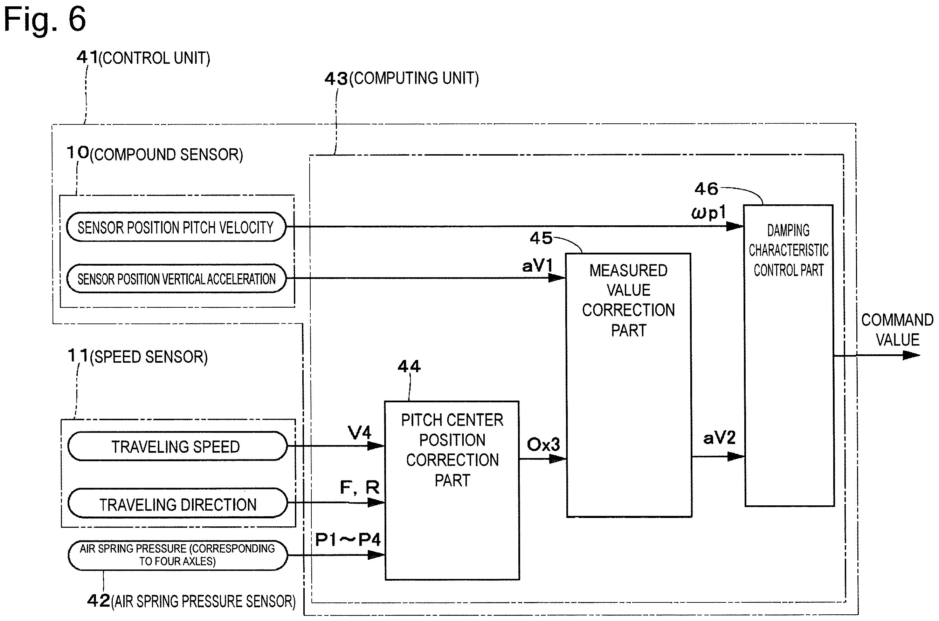

Fig. 6 illustrates a fourth embodiment of the invention. The fourth embodiment is characterized in that pitch center position is corrected in accordance with not only the traveling speed and the traveling direction of the rail vehicle but also balance of the vehicle body. In the fourth embodiment, the same constituent elements as those of the first embodiment are provided with the same reference marks, and explanations thereof will be omitted.

A control unit 41 controls the damping characteristics of the dampers 8. That is to say, the control unit 41 controls the vibration of the vehicle body 2 and defines the vehicle damping system together with the dampers 8. The control unit 41 is formed of the compound sensor 10 and a computing unit 43.

An air spring pressure sensor 42 detects pressure of the air springs 7 interposed between the vehicle body 2 and the chassis 3. The air spring pressure sensor 42 defines a spring pressure detection device. Each of the chassis 3 includes two of the air springs 7 on each lateral side thereof. The rail vehicle 1 therefore includes four air springs 7 in total. The air spring pressure sensor 42 detects the pressures (P1 to P4) of the four air springs 7.

The foregoing configuration makes it possible to understand passenger distribution (occupancy state) in the vehicle body 2 from a detection value of the air spring pressure sensor 42. For example, if the two air springs 7 located on the front side as viewed in the traveling direction of the vehicle body 2 have high values of the pressures (P1 and P2), it can be determined that passengers concentrate in the front part of the vehicle body 2 as viewed in the traveling direction. The air spring pressures (P1 to P4) detected by the air spring pressure sensor 42 are then outputted to the later-described computing unit 43.

The computing unit 43 is formed of, for example, a microcomputer or the like, and constitutes a correction device configured to correct pitch center position and correct a value detected by the compound sensor 10. The compound sensor 10, the speed sensor 11, and the air spring pressure sensor 42 are connected to an input side of the computing unit 43. Connected to an output side of the computing unit 43 are the dampers 8 interposed between the vehicle body 2 and the chassis 3. The computing unit 43 includes a pitch center position correction part 44 and a measured value correction part 45.

The pitch center position correction part 44 corrects the position of the center of rotational vibration of the vehicle body 2, namely, pitch center position, in accordance with a detection or calculation result of the speed sensor 11 and the air spring pressure sensor 42. The speed sensor 11 and the air spring pressure sensor 42 are connected to an input side of the pitch center position correction part 44, and the later-described measured value correction part 45 to an output side thereof. If the passengers concentrate in the front part of the vehicle body 2 as viewed in the traveling direction, weight of the front part of the vehicle body 2 is increased. The front part of the vehicle body 2 is therefore less likely to oscillate, as compared to the rear part of the vehicle body 2. Along with increase in weight of the front part of the vehicle body 2, the pitch center position shifts forward to the position of the center of gravity of the vehicle body 2.

The pitch center position correction part 44 calculates how much the pitch center position is deviated from the position of the center of gravity of the vehicle body 2 on the basis of values of traveling speed V4 and the traveling direction F (or R), which have been detected by the speed sensor 11, and the air spring pressures (P1 to P4) detected by the air spring pressure sensor 42. The pitch center position correction part 44 then corrects the pitch center position. To be more specific, relationship of the pitch center position with respect to the traveling speed and the traveling direction of the rail vehicle 1, which have been previously (experimentally) obtained, and the pressures of the air springs 7 can be mapped and stored in, for example, a storage part (not shown) of the computing unit 43. The pitch center position correction part 44 is capable of calculating pitch center position O×3 by referring to the map on the basis of the values of the traveling speed V4 and the traveling direction F, which have been detected by the speed sensor 11, and the like, and the air spring pressures (P1 to P4).

According to another method, the storage part of the computing unit 43 may store an arithmetic equation for calculating the pitch center position which has been experimentally obtained. In this case, the pitch center position correction part can calculate the pitch center position by assigning the values of the traveling speed V4 and the traveling direction F, which have been detected by the speed sensor 11, and the like, and the air spring pressures (P1 to P4) to the arithmetic equation. The pitch center position O×3 corrected by the pitch center position correction part 44 is outputted to the measured value correction part 45.

The measured value correction part 45 as a part for correcting a vertical acceleration detection value corrects the value detected by the compound sensor 10 on the basis of the pitch center position O×3. The compound sensor 10 and the pitch center position correction part 44 are connected to an input side of the measured value correction part 45. The measured value correction part 45 corrects vertical acceleration aV1 detected by the compound sensor 10 to pitch center position vertical acceleration aV2 on the basis of the pitch center position O×3 corrected by the pitch center position correction part 44. On the basis of distance between the pitch center position O×3 and a first point at which the compound sensor 10 is provided, the measured value correction part 45 corrects the vertical acceleration aV1 at the first point to the vertical acceleration aV2 at the pitch center position O×3.

The pitch center position vertical acceleration aV2 corrected by the measured value correction part 45 and the sensor position pitch velocity ωp1 detected by the compound sensor 10 are outputted to a damping characteristic control part 46. On the basis of the vertical acceleration aV2 and the pitch velocity ωp1, the damping characteristic control part 46 calculates target damping forces of the dampers 8 and outputs command values. The computing unit 43 supplies drive currents to the dampers 8 in accordance with the calculated target damping forces of the dampers 8. The damping forces of the dampers 8 are thus adjusted, decreasing vertical vibration (oscillation) of the vehicle body 2.

The fourth embodiment thus enables the computing unit 43 mounted on the vehicle body 2 to calculate the pitch center position O×3 on the basis of the traveling speed V4 and the traveling direction F or R of the rail vehicle 1 and the air spring pressures (P1 to P4). On the basis of distance between the compound sensor 10 located at a freely-selected first point in the vehicle body 2 and the pitch center position O×3, the computing unit 43 can correct the vertical acceleration aV1 and the pitch velocity ωp1 at the first point to the vertical acceleration aV2 at the pitch center position O×3.

Even if the pitch center position shifts from the position of the center of gravity of the vehicle body 2 due to increase in the traveling speed V4 of the rail vehicle 1 or change in passenger distribution in the vehicle body 2, it is possible to make the condition equivalent to the one that the compound sensor 10 is provided at the pitch center position O×3 that has changed. This enables an accurate detection of a vertical behavior of the vehicle body 2 using one compound sensor 10. The damping characteristics of the dampers 8 therefore can be properly controlled by means of a small number of (one, for example) compound sensors 10, making it possible to reduce cost. It is also possible to improve freedom of provision of the compound sensor 10 in the vehicle body 2.

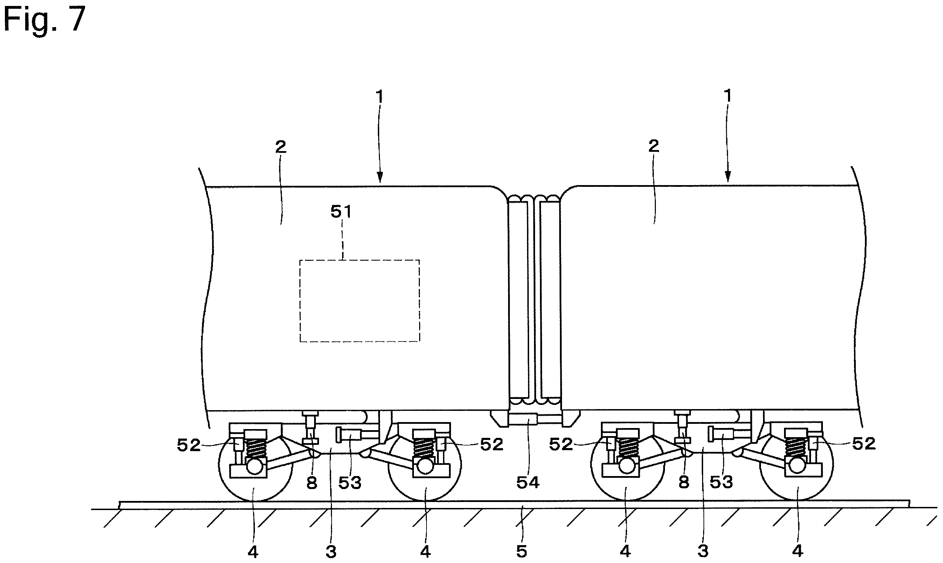

The first embodiment has been discussed with reference to the example in which the computing unit 12 controls the dampers 8 disposed between the vehicle body 2 and the chassis 3 and configured to generate the damping force which reduces the vertical vibration. However, the invention is not limited to the above configuration. For example, as in a modification illustrated in Fig. 7 but not falling under an embodiment, a computing unit 51 may control various dampers disposed in the rail vehicle 1. The various dampers include shaft dampers 52 disposed between the chassis 3 and the wheels 4, yaw dampers 53 disposed between the vehicle body 2 and the chassis 3, and an inter-vehicle yaw damper 54 disposed between adjacent vehicle bodies 2. The same applies to the second to fourth embodiments.

The first embodiment has been discussed with reference to the example in which the 6-axis sensor is used as the compound sensor 10. However, the invention is not limited to the foregoing configuration. It is possible to utilize a 3-axis sensor, as a compound sensor, which is capable of detecting 3-axis acceleration and 3-axis angular velocity. The same applies to the second to fourth embodiments and the modification.

The first embodiment has been discussed with reference to the example in which the computing unit 12 corrects the lateral acceleration aL1 at the first point to the lateral acceleration aL2 at the yaw center position O×1 on the basis of the distance between the corrected yaw center position O×1 and the first point at which the compound sensor 10 is provided. However, the invention does not necessarily have to be configured in the forgoing manner. For example, on the basis of the corrected yaw center position, the lateral acceleration and the yaw velocity at the first point can be corrected to the lateral acceleration and the yaw velocity at the freely-selected position, such as a position on the chassis and a damper provision position. The same applies to the second to forth embodiments and the modification.

The first embodiment has been discussed with reference to the example in which the computing unit 12 corrects the yaw center position and then corrects the lateral acceleration aL1 on the basis of the corrected value of the yaw center position. However, the invention does not necessarily have to be configured in this manner. As described in the fourth embodiment, for example, the computing unit may be configured to correct the pitch center position and then correct the vertical acceleration on the basis of the corrected value of the pitch center position. The computing unit also may be configured to correct both the yaw center position and the pitch center position to control the dampers. The same applies to the second and third embodiments and the modification.

The fourth embodiment has been explained with reference to the example in which the computing unit 43 corrects the pitch center position and then corrects the vertical acceleration aV1 on the basis of the corrected value of the pitch center position. However, the invention does not necessarily have to be thus configured. As described in the first embodiment, for example, the computing unit may be configured to correct the yaw center position and then correct the lateral acceleration on the basis of the corrected value of the yaw center position. The computing unit also may be configured to correct both the yaw center position and the pitch center position to control the dampers.

### REFERENCE SIGNS LIST

1: rail vehicle (vehicle)
2: vehicle body
3: chassis
8, 52, 53, 54: damper (force generation mechanism)
9, 21, 31, 41: control unit
10: compound sensor (vehicle body behavior detection device)
11: speed sensor (traveling speed detection device)
12, 22, 33, 43, 51: computing unit (correction device)
13, 34: yaw center position correction part
14, 35: measured value correction part (part for correcting a lateral acceleration detection value)
44: pitch center position correction part
45: measured value correction part (part for correcting a vertical acceleration detection value)

## Claims

1. A vehicle damping system for reducing rail vehicle vibration, comprising:
a force generation mechanism (8, 52, 53, 54) configured to be disposed in the rail vehicle including a vehicle body and a chassis at a position between the vehicle body and the chassis, the force generation mechanism in which a generative force varies in response to a command value from outside; and
a control unit (9, 21, 31, 41) configured to obtain a value outputted from a traveling speed detection device (11) that is capable of detecting or calculating traveling speed of the rail vehicle and supply the command value of the generative force to control the force generation mechanism (8, 52, 53, 54),
**characterized in that** the control unit includes:
a vehicle body behavior detection device (10) that is configured to be provided at a freely-selected position of the vehicle body and thus capable of detecting acceleration and angular velocity of yaw and/or pitch;
a storage part configured to store a map of a position of center of the vehicle body, which has been previously obtained, or an arithmetic equation for calculating the position of the center, which has been previously obtained;
a center position correction part (13, 34, 44) configured to refer to the map on the basis of the value outputted by the traveling speed detection device (11) or assign to the arithmetic equation the value outputted by the traveling speed detection device (11), and correct the position of the center of rotational vibration of the vehicle body; and
a measured value correction part (14, 35, 45) configured to correct a value detected by the vehicle body behavior detection device (10), on the basis of a correction value of the center position correction part (13, 34, 44).

2. The vehicle damping system according to Claim 1, wherein the vehicle body behavior detection device is provided at a first point that is located at freely-selected position on the vehicle body.

3. The vehicle damping system according to Claim 1 or 2, wherein the center position correction part (13, 34) includes:
a yaw center position correction part (13, 34) configured to correct yaw center position in accordance with the detection or calculation result of the traveling speed detection device; and
a part (14, 35)for correcting a lateral acceleration detection value, which is configured to correct a lateral acceleration detection value detected by the vehicle body behavior detection device, on the basis of the yaw center position corrected by the yaw center position correction part.

4. The vehicle damping system according to Claim 1 or 2,
wherein the center position correction part (44)includes:
a pitch center position correction part (44) configured to correct pitch center position in accordance with the detection or calculation result of the traveling speed detection device; and
a part (45) for correcting a vertical acceleration detection value, which is configured to correct a vertical acceleration detection value detected by the vehicle body behavior detection device, on the basis of the pitch center position corrected by the pitch center position correction part.

## Patentansprüche

1. Fahrzeugdämpfungssystem zur Verringerung der Schwingungen von Schienenfahrzeugen, umfassend:
einen Krafterzeugungsmechanismus (8, 52, 53, 54), der konfiguriert ist, um in dem Schienenfahrzeug angeordnet zu werden einschließlich einer Fahrzeugkarosserie und einem Fahrgestell an einer Position zwischen der Fahrzeugkarosserie und dem Fahrgestell, wobei in dem Krafterzeugungsmechanismus eine erzeugende Kraft in Reaktion auf einen Befehlswert von außen variiert; und
eine Steuereinheit (9, 21, 31, 41), die konfiguriert ist, um einen Wert zu erhalten, der von einer Vorrichtung (11) zur Erfassung der Fahrgeschwindigkeit ausgegeben wird, die in der Lage ist, die Fahrgeschwindigkeit des Schienenfahrzeugs zu erfassen oder zu berechnen, und den Sollwert der erzeugenden Kraft liefert, um den Krafterzeugungsmechanismus (8, 52, 53, 54) zu steuern,
**dadurch gekennzeichnet, dass** die Steuereinheit einschließt:
eine Vorrichtung (10) zur Erfassung des Karosserieverhaltens, die konfiguriert ist, um an einer frei wählbaren Position der Fahrzeugkarosserie bereitgestellt zu sein und somit in der Lage zu sein, die Beschleunigung und die Winkelgeschwindigkeit des Gierens und/oder des Nickens zu erfassen;
einen Speicherteil, der konfiguriert ist, um eine Karte einer Position des Mittelpunkts der Fahrzeugkarosserie, die zuvor erhalten wurde, oder eine arithmetische Gleichung zur Berechnung der Position des Mittelpunkts, die zuvor erhalten wurde, zu speichern;
ein Mittelpositionskorrekturteil (13, 34, 44), das konfiguriert ist, um auf der Grundlage des von der Vorrichtung (11) zur Erfassung der Fahrgeschwindigkeit ausgegebenen Wertes auf die Karte Bezug zu nehmen oder den von der Vorrichtung (11) zur Erfassung der Fahrgeschwindigkeit ausgegebenen Wert der arithmetischen Gleichung zuzuordnen und die Position des Drehschwingungszentrums der Fahrzeugkarosserie zu korrigieren; und
ein Messwertkorrekturteil (14, 35, 45), das konfiguriert ist, um einen von der Vorrichtung (10) zur Erfassung des Karosserieverhaltens erfassten Wert auf der Grundlage eines Korrekturwerts des Mittelpositionskorrekturteils (13, 34, 44) zu korrigieren.

2. Fahrzeugdämpfungssystem nach Anspruch 1, wobei die Vorrichtung zur Erfassung des Karosserieverhaltens an einem ersten Punkt bereitgestellt ist, der sich an einer frei wählbaren Position an der Karosserie befindet.

3. Fahrzeugdämpfungssystem nach Anspruch 1 oder 2, wobei das Mittelpositionskorrekturteil (13, 34) einschließt:
ein Giermittelpositionskorrekturteil (13, 34), das konfiguriert ist, um die Giermittelpunktsposition in Übereinstimmung mit dem Erfassungs- oder Berechnungsergebnis der Vorrichtung zur Erfassung der Fahrgeschwindigkeit zu korrigieren; und
einen Teil (14, 35) zum Korrigieren eines Seitenbeschleunigungs-Erfassungswertes, der konfiguriert ist, um einen Seitenbeschleunigungs-Erfassungswert, der von der Vorrichtung zur Erfassung des Karosserieverhaltens erfasst wird, auf der Grundlage der Giermittelpunktsposition, die von dem Giermittelpositionskorrekturteil korrigiert wird, zu korrigieren.

4. Fahrzeugdämpfungssystem nach Anspruch 1 oder 2, wobei das Mittelpositionskorrekturteil (44) einschließt:
ein Neigungsmittelpositionskorrekturteil (44), das konfiguriert ist, um die Neigungsmittelposition in Übereinstimmung mit dem Erfassungs- oder Berechnungsergebnis der Vorrichtung zur Erfassung der Fahrgeschwindigkeit zu korrigieren; und
ein Teil (45) zum Korrigieren eines Vertikalbeschleunigungs-Erfassungswertes, das konfiguriert ist, um einen Vertikalbeschleunigungs-Erfassungswert, der von der Vorrichtung zur Erfassung des Karosserieverhaltens erfasst wird, auf der Grundlage der durch den Neigungsmittelpositionskorrekturteil korrigierten Neigungsmittelposition zu korrigieren.

## Revendications

1. Système d'amortissement de véhicule pour la réduction de la vibration d'un véhicule ferroviaire, comprenant :
un mécanisme (8, 52, 53, 54) de génération de force configuré pour être disposé dans le véhicule ferroviaire incluant une carrosserie de véhicule et un châssis à une position entre la carrosserie de véhicule et le châssis, le mécanisme de génération de force dans lequel une force génératrice varie en réponse à une valeur de consigne provenant de l'extérieur ; et
une unité (9, 21, 31, 41) de commande configurée pour obtenir une valeur délivrée en sortie d'un dispositif (11) de détection de vitesse de déplacement qui est capable de détecter ou de calculer une vitesse de déplacement du véhicule ferroviaire et fournir la valeur de consigne de la force génératrice pour commander le mécanisme (8, 52, 53, 54) de génération de force,
**caractérisé en ce que** l'unité de commande inclut :
un dispositif (10) de détection de comportement de carrosserie de véhicule qui est configuré pour être ménagé à une position librement sélectionnée de la carrosserie de véhicule et ainsi capable de détecter une accélération et une vitesse angulaire de lacet et/ou de tangage ;
une partie de stockage configurée pour stocker une carte d'une position du centre de la carrosserie de véhicule, qui a été précédemment obtenue, ou une équation arithmétique pour le calcul de la position du centre, qui a été précédemment obtenue ;
une partie (13, 34, 44) de correction de position de centre configurée pour se référer à la carte sur la base de la valeur délivrée en sortie par le dispositif (11) de détection de vitesse de déplacement ou attribuer à l'équation arithmétique la valeur délivrée en sortie par le dispositif (11) de détection de vitesse de déplacement, et corriger la position du centre de vibration rotationnelle de la carrosserie de véhicule ; et
une partie (14, 35, 45) de correction de valeur mesurée configurée pour corriger une valeur détectée par le dispositif (10) de détection de comportement de carrosserie de véhicule, sur la base d'une valeur de correction de la partie (13, 34, 44) de correction de position de centre.

2. Système d'amortissement de véhicule selon la revendication 1, dans lequel le dispositif de détection de comportement de carrosserie de véhicule est ménagé à un premier point qui est situé à une position librement sélectionnée sur la carrosserie de véhicule.

3. Système d'amortissement de véhicule selon la revendication 1 ou la revendication 2, dans lequel la partie (13, 34) de correction de position de centre inclut :
une partie (13, 34) de correction de position de centre de lacet configurée pour corriger une position de centre de lacet conformément au résultat de détection ou de calcul du dispositif de détection de vitesse de déplacement ; et
une partie (14, 35) pour la correction d'une valeur de détection d'accélération latérale, qui est configurée pour corriger une valeur de détection d'accélération latérale détectée par le dispositif de détection de comportement de carrosserie de véhicule, sur la base de la position de centre de lacet corrigée par la partie de correction de position de centre de lacet.

4. Système d'amortissement de véhicule selon la revendication 1 ou la revendication 2, dans lequel la partie (44) de correction de position de centre inclut :
une partie (44) de correction de position de centre de tangage configurée pour corriger une position de centre de tangage conformément au résultat de détection ou de calcul du dispositif de détection de vitesse de déplacement ; et
une partie (45) pour la correction d'une valeur de détection d'accélération verticale, qui est configurée pour corriger une valeur de détection d'accélération verticale détectée par le dispositif de détection de comportement de carrosserie de véhicule, sur la base de la position de centre de tangage corrigée par la partie de correction de position de centre de tangage.
